# EUROPÄISCHE PATENTSCHRIFT

(11) **EP 3 640 069 B1**
(45) Veröffentlichungstag und Bekanntmachung des Hinweises auf die Patenterteilung: **05.05.2021**
(21) Anmeldenummer: 18200700.5
(22) Anmeldetag: 16.10.2018
(51) Int. Cl.: B60K 11/02, B60K 13/04, B60K 15/03

(54) **KRAFTFAHRZEUG MIT FLÜSSIGKEITSBEHÄLTER**
MOTOR VEHICLE WITH A LIQUID CONTAINER
VÉHICULE AUTOMOBILE POURVU DE RÉCIPIENT À LIQUIDE

(43) Veröffentlichungstag der Anmeldung: 22.04.2020
(73) Patentinhaber: Magna Energy Storage Systems GesmbH, 8261 Sinabelkirchen (AT)
(72) Erfinder: GROSS, Jörg, 50389 Wesseling (DE); MAREK, Kai, 8272 Sebersdorf (AT); KAHLER, Bernd, 8010 Graz (AT)
(74) Vertreter: Zangger, Bernd

(56) Entgegenhaltungen:
- DE-A1- 3 818 621
- JP-A- 2007 113 403
- US-A1- 2015 240 448

## Beschreibung

### Gebiet der Erfindung

Die vorliegende Erfindung betrifft ein Kraftfahrzeug umfassend einen Flüssigkeitsbehälter zur Aufnahme einer Betriebsflüssigkeit und ein Verfahren zum Erwärmen einer Betriebsflüssigkeit in einem solchen Flüssigkeitsbehälter.

### Stand der Technik

Flüssigkeitsbehälter werden für verschiedene Zwecke in Kraftfahrzeugen verwendet um Betriebsflüssigkeiten, die für den Betrieb des Kraftfahrzeuges erforderlich sind, vorrätig zu halten.

In jüngerer Zeit wird beispielsweise Wasser als Betriebsflüssigkeit verwendet, um Wasser in einen Ansaugtrakt eines Verbrennungsmotors einzuspritzen. Durch eine Wassereinspritzung kann eine klopfende Verbrennung bei hoher Motorlast eines Verbrennungsmotors vermieden werden. Das Wasser kann beispielsweise als Benzin-Wasser-Mischung in den Brennraum eines Motors eingespritzt werden, oder das Wasser wird mittels eines Wasserinjektors direkt in den Brennraum eingespritzt.

Problematisch ist, dass Wasser bereits bei einer Temperatur von 0 Grad Celsius gefriert. Außerdem benötigen gerade Wassereinspritzsysteme für Verbrennungsmotoren relativ große Mengen von Wasser pro Stunde, so dass entsprechend große Mengen an Wasser in flüssiger Form zur Verfügung gestellt werden müssen. Aus diesem Grund benötigen manche Behälter für Betriebsflüssigkeiten wie Wasser eine entsprechend leistungsfähige Heizung, um die benötigten Flüssigkeitsmengen zur Verfügung stellen zu können.

Die übliche Verwendung von elektrischen Heizungen zum Erwärmen von Betriebsflüssigkeiten in Flüssigkeitsbehältern reicht daher in manchen Anwendungsfällen nicht aus.

Eine Erwärmung der Betriebsflüssigkeit mittels Abwärme vom Antriebsmotor des Kraftfahrzeuges steht nicht schnell genug zur Verfügung, um rasch die benötigte Betriebsflüssigkeit bereit stellen zu können

Die US 2015/240448 A1 und die DE 38 18 621 A1 offenbaren jeweils ein Kraftfahrzeug, welches die Merkmale des Oberbegriffs des Anspruchs 1 enthält.

### Zusammenfassung der Erfindung

Es ist eine Aufgabe der Erfindung, ein Kraftfahrzeug umfassend einen Flüssigkeitsbehälter zur Aufnahme einer Betriebsflüssigkeit, insbesondere von Wasser, anzugeben, wobei ein Einfrieren der Betriebsflüssigkeit auch bei höheren Durchsätzen der Betriebsflüssigkeit auf ökonomische Weise verhindert werden soll. Insbesondere soll eine Betriebsflüssigkeit wie Wasser auch bei Außentemperaturen von etwa -20 Grad Celsius schnell und effizient aufgetaut werden können. Eine weitere Aufgabe der Erfindung ist es, ein leistungsfähiges Verfahren zum Erwärmen einer Betriebsflüssigkeit in einem solchen Flüssigkeitsbehälter anzugeben.

Die Lösung der Aufgabe erfolgt durch ein Kraftfahrzeug nach Anspruch 1.

Erfindungsgemäß wird ein ohnehin in einem Kraftfahrzeug vorhandenes Kühlsystem für einen Antriebsmotor des Kraftfahrzeuges genutzt, um mittels der von der Motorkühlung erwärmten Kühlflüssigkeit die Betriebsflüssigkeit zu erwärmen und ein Einfrieren der Betriebsflüssigkeit zu verhindern. Im Flüssigkeitsbehälter ist dazu zumindest eine, bevorzugt mehrere Heizschlangen angeordnet, um die Wärme der Kühlflüssigkeit an das umgebende Medium, nämlich die Betriebsflüssigkeit zu übertragen. Erfindungsgemäß ist eine Verbindungsleitung zweiseitig an den Kühlkreislauf angeschlossen, so dass ein kleinerer Sekundärkreislauf ausgebildet wird, der von der Kühlflüssigkeit durchflossen ist, wobei die Heizschlange im Sekundärkreislauf angeordnet ist. Der Kühlkreislauf ist daher vorzugsweise wahlweise kurzgeschlossen, so dass ein kleinerer zweiter Kühlkreislauf, der Sekundärkreislauf, entsteht, der wesentlich enger um den Flüssigkeitsbehälter geführt sein kann. Für die Erwärmung des Flüssigkeitsbehälters nicht benötigte Komponenten oder eine zu große Menge noch nicht erwärmter Kühlflüssigkeit können so von dem Kreislauf abgetrennt werden, der der Erwärmung des Flüssigkeitsbehälters dient. Hierdurch ist es somit möglich das Medium des Kühlkreislaufes zur Erwärmung der Betriebsflüssigkeit mittels einer Heizschlange zu verwenden, ohne jedoch stets den gesamten Kühlkreislauf nutzen zu müssen. Das Medium im Sekundärkreislauf und in den Heizschlangen kann somit getrennt, auf einfachere Weise erwärmt werden.

Bei einer solchen Anordnung ist es möglich eine Betriebsflüssigkeit wie Wasser auch bei Außentemperaturen von etwa -20 Grad Celsius schnell und effizient aufzutauen, insbesondere indem zunächst nur der Sekundärkreislauf zum Erwärmen mittels Heizschlangen genutzt wird und der übrige, "normale" Kühlkreislauf abgetrennt wird. Die Vorrichtung kann so eingerichtet sein, dass nach etwa 5 Minuten eine Menge von mindestens 600 ml flüssigen Wassers für eine Einspritzung zur Verfügung steht und längerfristig 12 Liter Wasser pro Stunde im flüssigen Zustand bereitgehalten und zur Verfügung gestellt werden können.

Als Verbindungsleitung kann im Rahmen der Erfindung jedes Verbindungselement verwendet werden, auch wenn dieses kaum leitungs- oder rohrförmige Abschnitte aufweist, beispielsweise eine sehr kurze Verbindungsleitung wie etwa in einem Verbindungsventil.

Die Verbindungsleitung kann im Flüssigkeitsbehälter angeordnet sein oder auch außerhalb des Flüssigkeitsbehälters, bevorzugt in der Nähe des Flüssigkeitsbehälters, angeordnet sein.

Im Sekundärkreislauf ist eine Pumpe angeordnet, um die Kühlflüssigkeit innerhalb des Sekundärkreislaufes zirkulieren zu können. Mittels der Pumpe kann somit die Kühlflüssigkeit ausschließlich im Sekundärkreislauf gefördert bzw. zirkuliert werden.

Die Pumpe ist in der Verbindungsleitung angeordnet.

Die Pumpe kann im Flüssigkeitsbehälter angeordnet sein oder außerhalb des Flüssigkeitsbehälters, insbesondere in der Nähe des Flüssigkeitsbehälters, angeordnet sein, jedenfalls aber im Sekundärkreislauf.

Bevorzugt ist zumindest ein Ventil, insbesondere Absperrventil, in der Verbindungsleitung angeordnet, so dass über das Ventil der Sekundärkreislauf gesperrt werden kann, während der Kühlkreislauf geöffnet ist. Der Kühlkreislauf kann in diesem Zustand bevorzugt dennoch durch die Heizschlangen geführt sein.

Bevorzugt ist zumindest ein Ventil, insbesondere Absperrventil, im Kühlkreislauf außerhalb des Sekundärkreislaufs angeordnet, so dass über das Ventil der Kühlkreislauf abgetrennt werden kann, während der Sekundärkreislauf geöffnet ist. Bevorzugt kann in diesem Zustand die Kühlflüssigkeit einerseits durch den Sekundärkreislauf zirkulieren und andererseits, getrennt davon, die Kühlflüssigkeit durch den Kühlkreislauf zirkulieren. Der Kühlkreislauf kann dann beispielsweise über eine weitere Verbindungsleitung geführt sein, die ebenfalls an zwei Enden an den Kühlkreislauf angeschlossen sein kann und die parallel zur Verbindungsleitung an den Kühlkreislauf angeschlossen sein kann.

Vorzugsweise ist zumindest eine elektrische Heizeinrichtung am Sekundärkreislauf angeordnet, um die Kühlflüssigkeit im Sekundärkreislauf zu wärmen. Zusätzlich zur Erwärmung der Kühlflüssigkeit durch die Abwärme des Antriebsmotors ist also eine elektrische Heizeinrichtung vorgesehen, um ebenfalls die Kühlflüssigkeit zu erwärmen. Insbesondere kann durch die elektrische Heizeinrichtung die Kühlflüssigkeit im Sekundärkreislauf erwärmt werden und, falls dieser vom restlichen Kühlkreislauf abgetrennt ist, ausschließlich die Kühlflüssigkeit im Sekundärkreislauf erwärmt werden. Somit kann ein Teil des Kühlkreislaufes auch ohne Abwärme vom Antriebsmotor zum Erwärmen der Heizschlange und somit der Betriebsflüssigkeit verwendet werden. Die elektrische Heizeinrichtung kann auch zum zusätzlichen Erwärmen, zusätzlich zur Erwärmung durch den Antriebsmotor genutzt werden.

Die elektrische Heizeinrichtung kann im Flüssigkeitsbehälter angeordnet sein oder außerhalb des Flüssigkeitsbehälters, insbesondere in der Nähe des Flüssigkeitsbehälters, angeordnet sein.

Die Heizschlange kann aus einem Glattrohr oder einem Wellrohr bestehen und das Material der Heizschlange ist bevorzugt ein Thermoplast, ein Buntmetall, Aluminium, Edelstahl oder ein Verbundwerkstoff, zum Beispiel Aluminium mit Kunststoff ummantelt.

Ein Verfahren zum Erwärmen einer Betriebsflüssigkeit in einem Flüssigkeitsbehälter in einem Kraftfahrzeug mit Merkmalen wie oben beschrieben, wobei das Kraftfahrzeug auch eine Steuereinheit umfasst, kann beinhalten, dass durch die Steuereinheit, bei Erkennen einer definierten Aktivierungsbedingung, der Sekundärkreislauf aktiviert wird oder falls dieser bereits aktiviert ist, aktiviert gelassen wird. Bei Erkennen einer definierten Deaktivierungsbedingung kann der Sekundärkreislauf durch die Steuereinheit deaktiviert werden oder falls dieser schon deaktiviert ist, in diesem Zustand belassen werden.

Dabei umfasst das Aktivieren des Sekundärkreislaufes bevorzugt, dass die Pumpe und die Heizeinrichtung eingeschaltet werden. Das Deaktivieren des Sekundärkreislaufes umfasst bevorzugt, dass die Pumpe und die Heizeinrichtung abgeschaltet werden.

Das Aktivieren des Sekundärkreislaufes kann auch umfassen, dass ein Absperrventil des Sekundärkreislaufes geöffnet wird und/oder dass ein Absperrventil des Kühlkreislaufes außerhalb des Sekundärkreislaufes gesperrt wird, insbesondere ein Absperrventil zwischen der Verbindungsleitung und der weiteren Verbindungsleitung.

Das Deaktivieren des Sekundärkreislaufes kann auch umfassen, dass ein Absperrventil des Sekundärkreislaufes gesperrt wird und/oder dass ein Absperrventil des Kühlkreislaufes außerhalb des Sekundärkreislaufes geöffnet wird, insbesondere ein Absperrventil zwischen der Verbindungsleitung und der weiteren Verbindungsleitung, so dass die Kühlflüssigkeit des Kühlreislaufes auch durch die Heizschlangen zirkuliert.

Die definierte Aktivierungsbedingung umfasst vorzugsweise einen definierten niedrigen Grenzwert der Motortemperatur und/oder der Außentemperatur. Die definierte Deaktivierungsbedingung umfasst vorzugsweise einen definierten hohen Grenzwert der Motortemperatur und/oder der Außentemperatur.

Somit kann durch die Steuereinheit bei Erkennen einer vorbestimmten Motortemperatur der Sekundärkreislauf gestoppt werden, in dem die Pumpe und die elektrische Heizeinrichtung abgeschaltet werden. In diesem Zustand erfolgt die Erwärmung der Betriebsflüssigkeit nur noch über den normalen Kühlkreislauf und somit im Wesentlichen über die Abwärme des Antriebsmotors.

Wenn der Antriebsmotor keine ausreichende Temperatur aufweist, zum Beispiel bei Inbetriebnahme des Kraftfahrzeuges, kann der Sekundärkreislauf aktiviert werden, insbesondere die Pumpe und die elektrische Heizeinrichtung eingeschaltet werden. Der übrige Kühlkreislauf kann über Ventile abgetrennt werden und separat vom Sekundärkreislauf zirkulieren.

### Kurzbeschreibung der Zeichnungen

Die Erfindung wird im Folgenden beispielhaft unter Bezugnahme auf die Zeichnungen beschrieben.
- Fig. 1: ist eine schematische Darstellung des Bereiches um den Flüssigkeitsbehälter eines erfindungsgemäßen Kraftfahrzeugs in einer ersten Ausführungsform.
- Fig. 2: ist eine schematische Darstellung gemäß Fig. 1, jedoch in einer zweiten Ausführungsform.
- Fig. 3: ist eine schematische Darstellung gemäß Fig. 1 und Fig. 2, jedoch in einer dritten Ausführungsform.

### Detaillierte Beschreibung der Erfindung

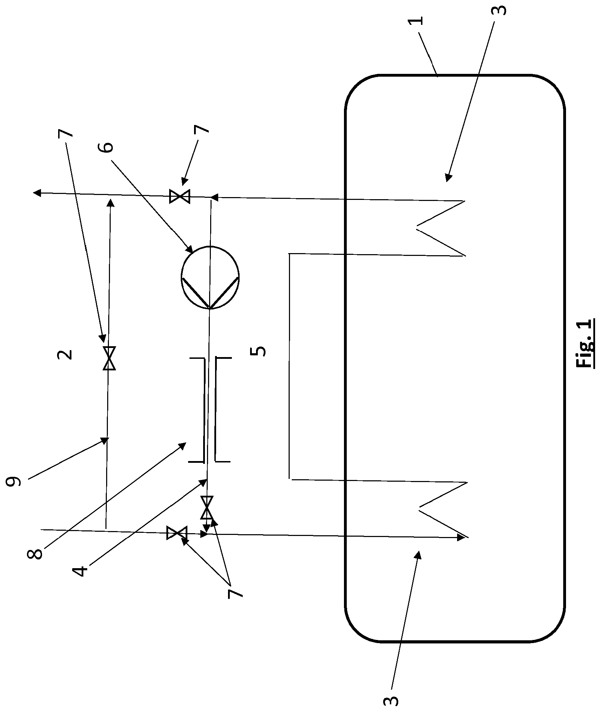

In Fig. 1 ist ein Teil eines erfindungsgemäßen Kraftfahrzeugs dargestellt, welches einen Flüssigkeitsbehälter 1 zur Aufnahme einer Betriebsflüssigkeit umfasst.

Ein Antriebsmotor des Kraftfahrzeuges wird durch einen Kühlkreislauf 2 gekühlt, wozu eine Kühlflüssigkeit im Kühlkreislauf 2 zirkuliert.

Im Flüssigkeitsbehälter 1 sind zwei Heizschlangen 3 angeordnet, die an den Kühlkreislauf 2 angeschlossen sind, so dass Kühlflüssigkeit auch durch die Heizschlangen 3 fließt, so dass durch die Heizschlangen 3 die Betriebsflüssigkeit im Flüssigkeitsbehälter 1 erwärmt wird, beispielsweise um diese aufzutauen.

Die Heizschlangen 3 bestehen aus einem Glattrohr oder einem Wellrohr, beispielsweise aus einem Thermoplast, aus Aluminium oder Edelstahl oder ein Verbundwerkstoff, zum Beispiel Aluminium mit Kunststoff ummantelt.

Eine Verbindungsleitung 4 ist zweiseitig an den Kühlkreislauf 2 angeschlossen ist, so dass ein kleinerer Sekundärkreislauf 5 ausgebildet wird, der von der Kühlflüssigkeit durchflossen ist, wobei die Heizschlange 3 im Sekundärkreislauf 5 angeordnet ist.

In der Ausführung der Fig. 1 ist die Verbindungsleitung 4 außerhalb des Flüssigkeitsbehälters 1 angeordnet.

In den Ausführungen der Fig. 1 bis 3 ist die Verbindungsleitung 4 eine kurze Leitung die zum Kurzschließen des Kühlkreislaufes 2 verwendet wird. Als Verbindungsleitung kann auch beispielsweise eine Leitung verwendet werden, welche die Heizschlangen 3 umfasst, und welche zweiseitig an einen geschlossenen Kühlkreislauf 2 angeschlossen wird.

Eine weitere Verbindungsleitung 9 ist, parallel zur Verbindungsleitung 4, zweiseitig an den Kühlkreislauf 2 angeschlossen.

Im Sekundärkreislauf 5, nämlich in der Verbindungsleitung 4, ist eine Pumpe 6 angeordnet, um die Kühlflüssigkeit innerhalb des Sekundärkreislaufes 5 zirkulieren zu können.

Die Pumpe 6 ist somit ebenfalls außerhalb des Flüssigkeitsbehälters 1, in der Nähe des Flüssigkeitsbehälters 1, angeordnet, so dass ein relativ kleiner Sekundärkreislauf 5 zum Erwärmen des Flüssigkeitsbehälters 1 betrieben werden kann.

Ventile 7, insbesondere Absperrventile, sind in der Verbindungsleitung 4 und im Kühlkreislauf 2 außerhalb des Sekundärkreislaufs 5 angeordnet, nämlich zwischen Verbindungsleitung 4 und weiterer Verbindungsleitung 9. Zusätzlich ist in der weiteren Verbindungsleitung 9 ein weiteres Ventil 7, insbesondere Absperrventil, angeordnet.

Über die Ventile 7 kann wahlweise der Sekundärkreislauf 5 stillgelegt werden, während der Kühlkreislauf 2 geöffnet bleibt, und wahlweise über die weitere Verbindungsleitung 9 oder über die Heizschlangen 3 des Sekundärkreislaufes 5 verläuft.

Es kann über die Ventile 7 auch der Kühlkreislauf 2 vom Sekundärkreislauf 5 abgetrennt werden, so dass die Kühlflüssigkeit über die weitere Verbindungsleitung 9 zurückläuft, während der Sekundärkreislauf 5 geöffnet bleibt und in sich zirkuliert.

Eine elektrische Heizeinrichtung 8 ist am Sekundärkreislauf 5 angeordnet, um die Kühlflüssigkeit im Sekundärkreislauf 5 zu wärmen. Die elektrische Heizeinrichtung 8 ist an der Verbindungsleitung 4 angeordnet, um die Verbindungsleitung 4 und somit die Kühlflüssigkeit in der Verbindungsleitung 4 zu erwärmen. Die elektrische Heizeinrichtung 8 ist somit in Fig. 1 außerhalb des Flüssigkeitsbehälters 1, in der Nähe des Flüssigkeitsbehälters 1, angeordnet.

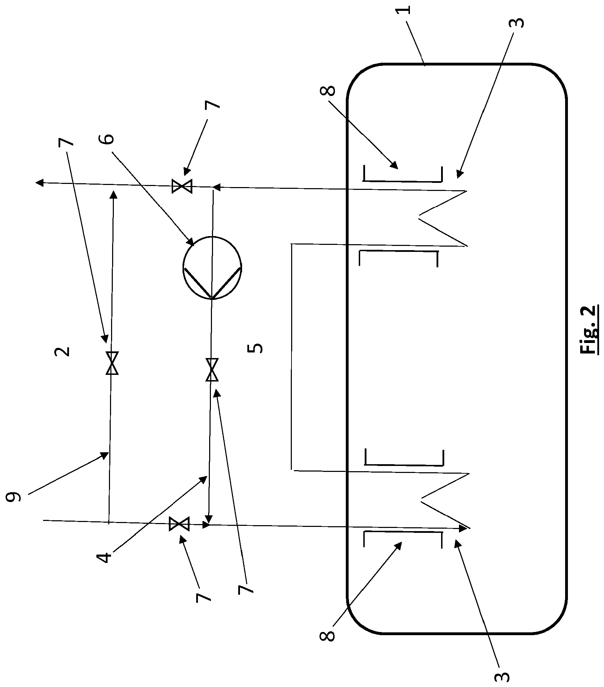

Die Ausführung der Fig. 2 unterscheidet sich von der Fig. 1 dadurch, dass die Verbindungsleitung 4 mit der Pumpe 6 zwar außerhalb des Flüssigkeitsbehälters 1 angeordnet ist, die elektrische Heizeinrichtung 8 aber im Flüssigkeitsbehälter 1 angeordnet ist.

Die elektrische Heizeinrichtung 8 beheizt hier direkt die Leitungen des Sekundärkreislaufes 5 in unmittelbarer Nähe der Heizschlangen 3 und/oder im Bereich der Heizschlangen 3.

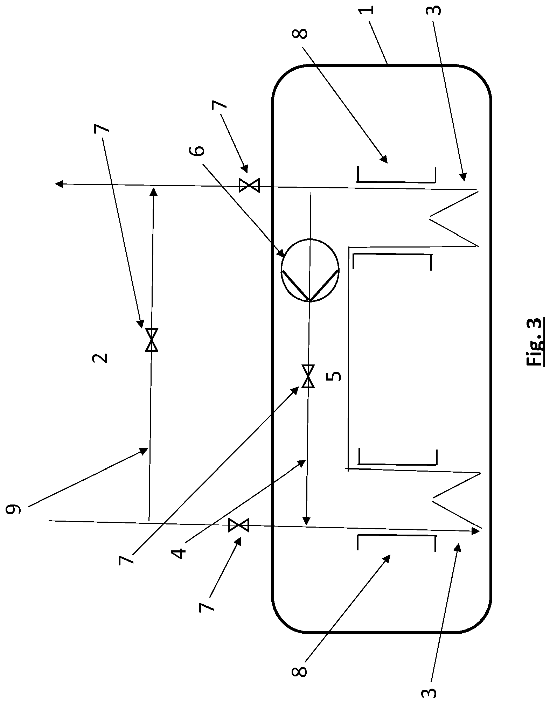

In der Ausführung der Fig. 3 ist schließlich die Verbindungsleitung 4 selbst, mitsamt der Pumpe 6, im Flüssigkeitsbehälters 1 eingebaut. Die weitere Verbindungsleitung 9 verbleibt hierbei außerhalb des Flüssigkeitsbehälters 1, so dass der Sekundärkreislauf 5 vollständig im Flüssigkeitsbehälters 1 und der normale Kühlkreislauf 2 vollständig außerhalb des Flüssigkeitsbehälters 1 verlaufen kann.

Die elektrische Heizeinrichtung 8 ist ebenfalls im Flüssigkeitsbehälter 1 angeordnet, und wirkt hier direkt auf die Heizschlangen 3 oder die Leitungen des Sekundärkreises in der Nähe der Heizschlangen 3, jedenfalls innerhalb des Flüssigkeitsbehälters 1.

Im Betrieb kann eine Anordnung nach einer der Figuren 1 bis 3 so verwendet werden, dass nach dem Start des Antriebsmotors des Kraftfahrzeuges zunächst die Pumpe 6 aktiviert wird, so dass die Kühlflüssigkeit im kleinen Sekundärkreislauf nur in der Nähe des Flüssigkeitsbehälters 1 zirkuliert. Ferner wird die elektrische Heizung 8 aktiviert, so dass das Medium im Sekundärkreislauf 5 und in den Heizschlangen 3, nämlich wieder die Kühlflüssigkeit, aufgeheizt wird. Getrennt vom Sekundärkreislauf 5 kann Kühlflüssigkeit im "normalen" Kühlkreislauf 2 zirkulieren, insbesondere über die weitere Verbindungsleitung 9. Die Ventile 7 zwischen Verbindungsleitung 4 und weiterer Verbindungsleitung 9 sind hierbei gesperrt, die Ventile 7 in der Verbindungsleitung 4 und in der weiteren Verbindungsleitung 9 sind geöffnet.

Nach Erreichen einer definierten Motortemperatur, insbesondere der für den Betrieb des Kraftfahrzeuges üblichen Motortemperatur, wird der kleine Heizkreislauf, nämlich der Sekundärkreislauf 5, gestoppt. Die elektrische Pumpe 6 und die elektrische Heizung 8 werden ausgeschalten. Stattdessen wird nun die durch den Antriebsmotor erwärmte Kühlflüssigkeit als Heizmedium genutzt, dass - insbesondere ohne weitere Erwärmung durch die elektrische Heizeinrichtung 8 - durch die Heizschlangen im Flüssigkeitsbehälter 1 geführt wird. Die Ventile 7 zwischen Verbindungsleitung 4 und weiterer Verbindungsleitung 9 sind hierbei geöffnet, die Ventile 7 in der Verbindungsleitung 4 und in der weiteren Verbindungsleitung 9 können gesperrt sein.

### Bezugszeichenliste

- 1: Flüssigkeitsbehälter
- 2: Kühlkreislauf
- 3: Heizschlange
- 4: Verbindungsleitung
- 5: Sekundärkreislauf
- 6: Pumpe
- 7: Ventil
- 8: elektrische Heizeinrichtung
- 9: weitere Verbindungsleitung

## Patentansprüche

1. Kraftfahrzeug umfassend einen Flüssigkeitsbehälter (1) zur Aufnahme einer Betriebsflüssigkeit, ferner umfassend einen Antriebsmotor des Kraftfahrzeuges und einen Kühlkreislauf (2) zum Kühlen des Antriebsmotors, wobei eine Kühlflüssigkeit im Kühlkreislauf (2) zirkuliert, wobei im Flüssigkeitsbehälter (1) zumindest eine Heizschlange (3) angeordnet ist, wobei die Heizschlange (3) derart an den Kühlkreislauf (2) angeschlossen ist, dass die Kühlflüssigkeit durch die Heizschlange (3) fließen kann, um die Betriebsflüssigkeit zu erwärmen, wobei eine Verbindungsleitung (4) zweiseitig an den Kühlkreislauf (2) angeschlossen ist, so dass ein kleinerer Sekundärkreislauf (5) ausgebildet wird, der von der Kühlflüssigkeit durchflossen ist, wobei die Heizschlange (3) im Sekundärkreislauf (5) angeordnet ist, **dadurch gekennzeichnet, dass** im Sekundärkreislauf (5) eine Pumpe (6) angeordnet ist, um die Kühlflüssigkeit innerhalb des Sekundärkreislaufes (5) zirkulieren zu können, wobei die Pumpe (6) in der Verbindungsleitung (4) angeordnet ist.

2. Kraftfahrzeug nach Anspruch 1,
**dadurch gekennzeichnet, dass** die Verbindungsleitung (4) im Flüssigkeitsbehälter (1) angeordnet ist oder dass die Verbindungsleitung (4) außerhalb des Flüssigkeitsbehälters (1) angeordnet ist.

3. Kraftfahrzeug nach Anspruch 1 oder 2,
**dadurch gekennzeichnet, dass** die Pumpe (6) im Flüssigkeitsbehälter (1) angeordnet ist oder dass die Pumpe (6) außerhalb des Flüssigkeitsbehälters (1) angeordnet ist.

4. Kraftfahrzeug nach zumindest einem der vorhergehenden Ansprüche,
**dadurch gekennzeichnet, dass** zumindest ein Ventil (7), insbesondere Absperrventil, in der Verbindungsleitung (4) angeordnet ist, so dass über das Ventil (7) der Sekundärkreislauf (5) gesperrt werden kann, während der Kühlkreislauf (2) geöffnet ist.

5. Kraftfahrzeug nach zumindest einem der vorhergehenden Ansprüche,
**dadurch gekennzeichnet, dass** zumindest ein Ventil (7), insbesondere Absperrventil, im Kühlkreislauf (2) außerhalb des Sekundärkreislaufs (5) angeordnet ist, so dass über das Ventil (7) der Kühlkreislauf (2) vom Sekundärkreislauf (5) getrennt werden kann, während der Sekundärkreislauf (5) geöffnet ist.

6. Kraftfahrzeug nach zumindest einem der vorhergehenden Ansprüche,
**dadurch gekennzeichnet, dass** zumindest eine weitere Verbindungsleitung (9) zweiseitig an den Kühlkreislauf (2) angeschlossen ist, wobei in der weiteren Verbindungsleitung (9) bevorzugt ein weiteres Ventil (7), insbesondere Absperrventil, angeordnet ist.

7. Kraftfahrzeug nach zumindest einem der vorhergehenden Ansprüche,
**dadurch gekennzeichnet, dass** zumindest eine elektrische Heizeinrichtung (8) am Sekundärkreislauf (5) angeordnet ist, um die Kühlflüssigkeit im Sekundärkreislauf (5) zu wärmen.

8. Kraftfahrzeug nach Anspruch 7,
**dadurch gekennzeichnet , dass** die elektrische Heizeinrichtung (8) im Flüssigkeitsbehälter (1) angeordnet ist oder dass die elektrische Heizeinrichtung (8) außerhalb des Flüssigkeitsbehälters (1) angeordnet ist.

9. Kraftfahrzeug nach zumindest einem der vorhergehenden Ansprüche,
**dadurch gekennzeichnet, dass** die Heizschlange (3) aus einem Glattrohr oder einem Wellrohr besteht und bevorzugt das Material der Heizschlange (3) ein Thermoplast ist oder ein Buntmetall oder Aluminium oder Edelstahl oder ein Verbundwerkstoff, zum Beispiel Aluminium mit Kunststoff ummantelt.

10. Verfahren zum Erwärmen einer Betriebsflüssigkeit in einem Flüssigkeitsbehälter in einem Kraftfahrzeug nach zumindest einem der vorhergehenden Ansprüche, wobei das Kraftfahrzeug eine Steuereinheit umfasst,
**dadurch gekennzeichnet , dass** die Steuereinheit dazu eingerichtet ist, bei Erkennen einer definierten Aktivierungsbedingung den Sekundärkreislauf (5) zu aktivieren oder aktiviert zu lassen und/oder bei Erkennen einer definierten Deaktivierungsbedingung den Sekundärkreislauf (5) zu deaktivieren oder deaktiviert zu lassen.

11. Verfahren nach Anspruch 10, in einem Kraftfahrzeug nach den Ansprüchen 1 und 7,
**dadurch gekennzeichnet, dass** das Aktivieren des Sekundärkreislaufes (5) umfasst, dass die Pumpe (6) und die Heizeinrichtung (8) eingeschaltet werden und/oder dass das Deaktivieren des Sekundärkreislaufes (5) umfasst, dass die Pumpe (6) und die Heizeinrichtung (8) abgeschaltet werden.

12. Verfahren nach zumindest einem der Ansprüche 10 bis 11,
**dadurch gekennzeichnet, dass** die definierte Aktivierungsbedingung einen definierten niedrigen Grenzwert der Motortemperatur umfasst und/oder einen definierten niedrigen Grenzwert der Außentemperatur umfasst und/oder dass die definierte Deaktivierungsbedingung einen definierten hohen Grenzwert der Motortemperatur umfasst und/oder einen definierten hohen Grenzwert der Außentemperatur umfasst.

## Claims

1. Motor vehicle comprising a liquid container (1) for receiving an operating liquid, additionally comprising a drive motor of the motor vehicle and a cooling circuit (2) for cooling the drive motor, wherein a cooling liquid circulates in the cooling circuit (2), wherein at least one heating coil (3) is arranged in the liquid container (1), wherein the heating coil (3) is attached to the cooling circuit (2) in such a manner that the cooling liquid can flow through the heating coil (3) in order to heat the operating liquid, **wherein** a connection line (4) is attached to the cooling circuit (2) on two sides, so that a smaller secondary circuit (5) is created through which the cooling liquid flows, wherein the heating coil (3) is arranged in the secondary circuit (5) **characterized in that** a pump (6) is arranged in the secondary circuit (5) so that cooling liquid can be circulated within the secondary circuit (5), wherein the pump (6) is arranged in the connection line (4).

2. Motor vehicle according to Claim 1,
**characterized in that** the connection line (4) is arranged in the liquid container (1) or that the connection line (4) is arranged outside the liquid container (1).

3. Motor vehicle according to Claim 1 or 2,
**characterized in that** the pump (6) is arranged in the liquid container (1) or that the pump (6) is arranged outside the liquid container (1.

4. Motor vehicle according to at least one of the preceding claims,
**characterized in that** at least one valve (7), in particular a cut-off valve, is arranged in the connection line (4), so that the secondary circuit (5) can be cut off by the valve (7) while the cooling circuit (2) is open.

5. Motor vehicle according to at least one of the preceding claims,
**characterized in that** at least one valve (7), in particular a cut-off valve, is arranged in the cooling circuit (2) outside the secondary circuit (5), so that the cooling circuit (2) can be separated from the secondary circuit (5) by the valve (7) while the secondary circuit (5) is open.

6. Motor vehicle according to at least one of the preceding claims,
**characterized in that** at least one further connection line (9) is attached to the cooling circuit (2) on two sides, wherein a further valve (7), in particular a cut-off valve, is arranged in the other connection line (9).

7. Motor vehicle according to at least one of the preceding claims,
**characterized in that** at least one electrical heating device (8) is arranged on the secondary circuit (5), in order to heat the cooling liquid in the secondary circuit (5).

8. Motor vehicle according to Claim 7,
**characterized in that** the electrical heating device (8) is arranged in the liquid container (1) or that the electrical heating device (8) is arranged outside the liquid container (1.

9. Motor vehicle according to at least one of the preceding claims,
**characterized in that** the heating coil (3) is made of a smooth tube or a corrugated tube and the material of the heating coil (3) is preferably a thermoplastic or a non-ferrous metal or aluminium or stainless steel or a composite material, for example plastic-coated aluminium.

10. Method for heating an operating liquid in a liquid container in a motor vehicle according to at least one of the preceding claims, wherein the motor vehicle comprises a control unit,
**characterized in that** the control unit it set up to activate the secondary circuit (5), or leave it activated, when a defined activation condition is identified and/or to deactivate the secondary circuit (5), or leave it deactivated, when a defined deactivation condition is identified.

11. Method according to Claim 10 in a motor vehicle according to Claims 1 and 7
**characterized in that** activation of the secondary circuit (5) involves the pump (6) and the heating device (8) being switched on and/or deactivation of the secondary circuit (5) involves the pump (6) and the heating device (8) being switched off.

12. Method according to at least one of Claims 10 to 11,
**characterized in that** the defined activation condition comprises a defined low threshold value of the engine temperature and/or a defined low threshold value of the outside temperature and/or that the defined deactivation condition comprises a defined high threshold value of the engine temperature and/or a defined high threshold value of the outside temperature.

## Revendications

1. Véhicule automobile comprenant un récipient à liquide (1) destiné à recevoir un liquide de service, comprenant en outre un moteur d'entraînement du véhicule automobile et un circuit de refroidissement (2) destiné à refroidir le moteur d'entraînement, un liquide de refroidissement circulant dans le circuit de refroidissement (2), au moins un serpentin de chauffage (3) étant disposé dans le récipient de liquide (1), le serpentin de chauffage (3) étant raccordé au circuit de refroidissement (2) de telle sorte que le liquide de refroidissement puisse s'écouler à travers le serpentin de chauffage (3) afin de chauffer le liquide de service, une conduite de liaison (4) étant raccordée sur deux côtés au circuit de refroidissement (2) de façon à former un circuit secondaire plus petit (5) qui est traversé par le liquide de refroidissement, le serpentin de chauffage (3) étant disposé dans le circuit secondaire (5), **caractérisé en ce qu'**une pompe (6) est disposée dans le circuit secondaire (5) afin de pouvoir faire circuler le liquide de refroidissement à l'intérieur du circuit secondaire (5), la pompe (6) est disposée dans la conduite de raccordement (4).

2. Véhicule automobile selon la revendication 1, **caractérisé en ce que** la conduite de liaison (4) est disposée dans le récipient à liquide (1) ou **en ce que** la conduite de liaison (4) est disposée à l'extérieur du récipient à liquide (1).

3. Véhicule automobile selon la revendication 1 ou 2,
**caractérisé en ce que** la pompe (6) est disposée dans le récipient à liquide (1) ou **en ce que** la pompe (6) est disposée à l'extérieur du récipient à liquide (1).

4. Véhicule automobile selon l'une au moins des revendications précédentes,
**caractérisé en ce qu'**au moins une vanne (7), en particulier une vanne d'arrêt, est disposée dans la conduite de liaison (4) de sorte que le circuit secondaire (5) puisse être bloqué par le biais de la vanne (7) pendant que le circuit de refroidissement (2) est ouvert.

5. Véhicule automobile selon l'une au moins des revendications précédentes,
**caractérisé en ce qu'**au moins une vanne (7), en particulier une vanne d'arrêt, est disposée dans le circuit de refroidissement (2) à l'extérieur du circuit secondaire (5) de sorte que le circuit de refroidissement (2) puisse être séparé du circuit secondaire (5) par biais de la vanne (7), pendant que le circuit secondaire (5) est ouvert.

6. Véhicule automobile selon l'une au moins des revendications précédentes,
**caractérisé en ce qu'**au moins une autre conduite de liaison (9) est raccordée sur deux côtés au circuit de refroidissement (2), une autre vanne (7), en particulier une vanne d'arrêt, étant de préférence disposée dans l'autre conduite de liaison (9).

7. Véhicule automobile selon au moins l'une des revendications précédentes,
**caractérisé en ce qu'**au moins un dispositif de chauffage électrique (8) est disposé au niveau du circuit secondaire (5) pour chauffer le liquide de refroidissement dans le circuit secondaire (5).

8. Véhicule automobile selon la revendication 7,
**caractérisé en ce que** le dispositif de chauffage électrique (8) est disposé dans le récipient à liquide (1) ou **en ce que** le dispositif de chauffage électrique (8) est disposé à l'extérieur du récipient à liquide (1) .

9. Véhicule automobile selon l'une au moins des revendications précédentes,
**caractérisé en ce que** le serpentin de chauffage (3) comprend un tube lisse ou un tube ondulé et de préférence la matière du serpentin de chauffage (3) est une matière thermoplastique ou un métal non ferreux ou de l'aluminium ou de l'acier inoxydable ou un matériau composite, par exemple de l'aluminium recouvert de matière synthétique.

10. Procédé de chauffage d'un réservoir de service dans un récipient à liquide d'un véhicule automobile selon l'une au moins des revendications précédentes, le véhicule automobile comprenant une unité de commande, **caractérisé en ce que** l'unité de commande est adaptée pour activer ou laisser activé le circuit secondaire (5) lors de la reconnaissance d'une condition d'activation définie et/ou pour désactiver ou laisser désactivé le circuit secondaire (5) lors de la reconnaissance d'une condition de désactivation définie.

11. Procédé selon la revendication 10, dans un véhicule automobile selon les revendications 1 et 7, **caractérisé en ce que** l'activation du circuit secondaire (5) implique la mise en circuit de la pompe (6) et du dispositif de chauffage (8) et/ou que la désactivation du circuit secondaire (5) implique la mise hors circuit de la pompe (6) et du dispositif de chauffage (8).

12. Procédé selon l'une au moins des revendications 10 et 11, **caractérisé en ce que** la condition d'activation définie implique une valeur limite basse définie de la température du moteur et/ou implique une valeur limite basse définie de la température extérieure et/ou que la condition de désactivation définie implique une valeur limite supérieure définie de la température du moteur et/ou implique une valeur limite supérieure définie de la température extérieure.
